# EUROPEAN PATENT APPLICATION

(11) **EP 1 975 479 A2**
(43) Date of publication of application: **01.10.2008**
(21) Application number: 07075807.3
(22) Date of filing: 13.09.2007
(51) Int. Cl.: F16K 1/226

(54) **Tap or butterfly valve, in particular for containers.**

(30) Priority: 28.03.2007 IT MC20070062
(71) Applicant: O.M.C.E. di Rocchetti Amleto S.p.A., 60010 Ripe (AN) (IT)
(72) Inventor: Rocchetti, Giovanni, 60010 Ripe (AN) (IT)
(74) Representative: Baldi, Claudio

(57) **Abstract**

The present invention relates to a tap (11) or a valve that comprises a valve body (12) with an inlet (9) and an outlet (10), a butterfly shutter (F) designed to cooperate through rotation with the valve body (12) to close/open the said valve, the said butterfly shutter (F) being composed of at least one shutter (3) and two seal wings (2); the said butterfly shutter (F) being provided with first seal means (6a) situated between the shutter (3) and the valve body (12) and second seal means (6b) situated between the said valve body (12) and the seal wings (2).

## Description

The present invention relates to a tap or valve for controlled outflow or emptying of fluids, in particular fluids contained and/or transported in plastic containers with thin walls.

This type of containers are especially used for their limited cost, reduced weight and high versatility. These containers are often provided with an external protective support network structure and with a standard pallet made of wood or other material.

Taps or valves of the above type are known and largely used, in spite of some inconveniences.

It is important to ensure quick safe emptying, either complete or partial. of the said containers, which must be transported without any leakage of the fluids they contain.

An outflow hole is normally provided on the side of the container in order to empty it, with a normally threaded mouth or flange being applied to the said hole, or obtained from the same piece with the wall of the container, on which a cap, valve or tap is screwed.

The taps or valves that are used according to the known technique are controlled manually and the mobile functional element of the valve or tap can have different shapes: a cylindrical rotating body with a cavity; a cap that is raised and lowered by a lever actuated by a crank; a butterfly with circular shape that rotates around a pin; a mobile diaphragm that closes or opens an outflow hole, etc.

The taps or valves according to the known technique are often impaired by seal problems, meaning that undesired leakages normally occur where the valve or tap manual control is located, with loss of fluid following to the imperfect seal of the gaskets situated between the valve body and the aforementioned mobile functional element.

These leakages are mainly caused by the high pressure exerted on the valve or cap because of the hydrostatic load of the liquid stored in the container and therefore the seals are subject to considerable thrust, often generating leakages in the areas where the two parts of the valve are interfaced, which are the areas requiring the highest seal.

The seal means are generally situated between the mobile functional element and the valve body or tap, and are in general provided on the valve body. This requires an internal machining operation of the valve body to apply the seal parts, with considerable costs.

Another problem encountered in valves or taps according to the known technique relates to the fact that, especially in the constructive embodiments where the mobile functional element is a butterfly shutter, due to the high pressure values, the body of the shutter has a large diameter to allow for quick outflow of the fluid stored in the container.

A butterfly shutter is typically provided with a central area, that is to say the shutter body, with two seal wings having a complementary profile with the profile of the internal valve body, in the area where the mobile functional element is applied.

Especially in the case of a high diameter, serious seal problems have been noted at the opposite ends of the shutter body, where the shutter body and the valve body are mutually coupled.

In some cases, in the valves according to the known technique the shutter body is off-centred with respect to the two seal wings, and consequently the two seal wings have different shape and dimensions. This involves an asymmetric distribution of the hydraulic pressure on the two seal wings of the butterfly valve, with consequent seal problems with the valve closed and actuation problems of the valve itself, for which the closing or opening operation will be alternatively simplified, according to the different position of the asymmetric seal wings.

Another drawback of traditional valves or taps is related to the fact that it is often impossible to maintain a partial opening position of the butterfly: When emptying the container, it may be necessary to maintain the mobile functional element, for example the butterfly shutter, in an opening position between the completely open and the completely closed position of the valve. In these cases, the hydrostatic pressure and the hydrodynamic load exerted on the wings of the butterfly cause the undesired rotation of the shutter, which tends to open or close, in specific configurations of the butterfly, and in any case changes its position, with consequent change of the delivery and/or speed of the fluid that is being emptied from the container.

The purpose of the present invention is to devise a tap or valve that provides a simple, inexpensive solution to the aforementioned drawbacks of known taps or valves.

The said purpose has been achieved by the present invention with a tap or a valve that comprises: a valve body with an inlet and an outlet, a butterfly shutter designed to cooperate through rotation with the valve body to close/open the said valve, the said butterfly shutter being composed of at least one shutter and two seal wings, and also being composed of actuating means to open and close the said butterfly shutter and being provided with first seal means situated between the shutter body and the valve body, being the first sealing means on a horizontal plane that is to say an orthogonal plane to the rotation axis of the butterfly shutter, and second seal means situated between the said valve body and the seal wings, being the second seal means on a vertical plane, that is to say an orthogonal plane to the horizontal plane and/or a plane on which the inlet and the outlet rest.

In other words, the valve or tap according to the present invention comprises a butterfly valve with a valve body that cooperates with a butterfly shutter, which comprises a shutter body and two seal wings and in which seal means are situated both between the valve body and the shutter body, and between the valve body and the seal wings.

In particular, the seal means between valve body and seal wings are advantageously arranged in peripheral position on the seal wings themselves.

In this way, the seal means between the valve body and the shutter body and between the valve body and seal wings of the shutter advantageously prevent the undesired leakage of fluids, both with closed and open valve, because they are basically arranged in all wet or wettable areas of the container of mutual coupling between a fixed part and a mobile part of the valve.

Since the preferred embodiment of the present invention does not disregard any areas of mutual coupling between fixed part and mobile part that comes in contact with the fluid of the container or that may come in contact when the valve is opened, the present invention obtains excellent seal, thus advantageously overcoming the seal problems of the valves according to the known technique.

Moreover, construction is extremely simple and inexpensive, because the seal means are obtained from the same piece as the butterfly shutter or applied to it, thus avoiding the need to apply seal means to the valve body, contributing to the inexpensiveness of the valve according to the present invention.

According to a preferred embodiment of the valve or tap according to the present invention, the shutter body of the butterfly valve is centred with respect to the seal wings, that is to say the two wings have the same shape and size. This involves a symmetric distribution of the hydraulic pressure on the seal wings, with a higher seal when the valve is closed because the equal symmetrical distribution of loads on the butterfly eliminates the rotation momentums generated with an asymmetric distribution of loads, such as in the case of the known technique, with consequent better seal.

The combination of a seal as described above and a valve having symmetric seal wings generates a great advantage in terms of elimination of leakage.

Further characteristics and improvements are the object of the enclosed claims and subclaims.

The characteristics and advantages of the present invention will become evident following to the detailed description of the figures, whereby:
Fig. 1 is a longitudinal sectional view of the tap or valve according to the present invention with open valve,
Fig. 2 is a longitudinal sectional view of the tap or valve according to the present invention with closed valve,
Fig. 3 is a perspective view of the shutter of the tap or valve according to the present invention,
Fig. 4 is a perspective view of the first and second seal means of the tap or valve according to the present invention,
Fig. 5 is a perspective view of the shutter of the tap or valve provided with first and second seal means according to the present invention,
Fig. 6 is a longitudinal perspective view of the tap or valve according to the present invention, without shutter,
Fig. 7 is a longitudinal perspective view of the tap or valve according to the present invention, with butterfly shutter in closed position,
Fig. 8 is a longitudinal perspective view of the tap or valve according to the present invention mounted on the container and with butterfly shutter in closed position.

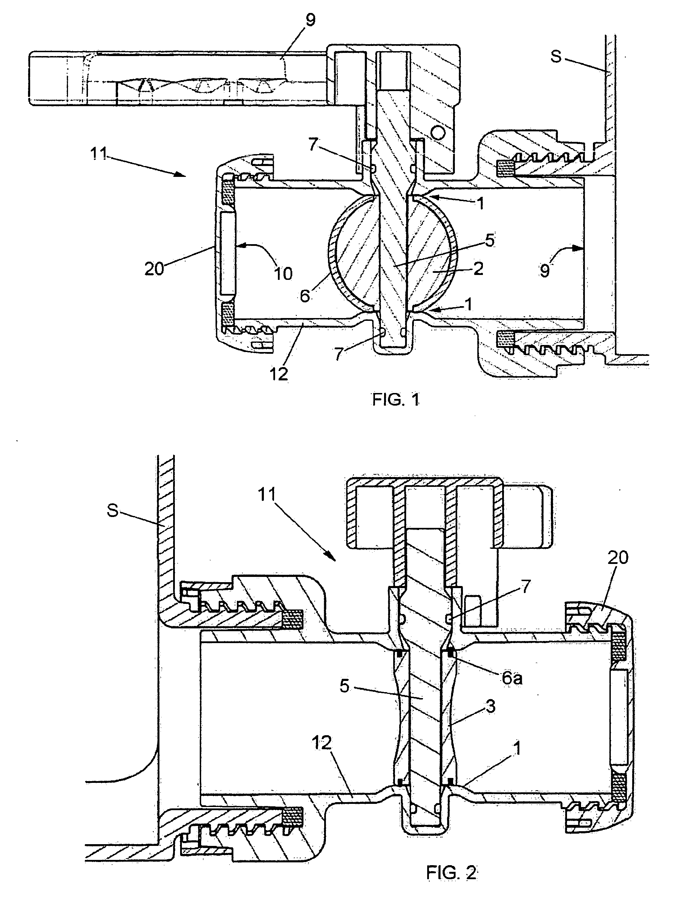

Figure 1 is a longitudinal sectional view of the tap (11) or valve according to the present invention, when the valve is open.

The tap (11) or valve comprises a valve body (12) with an inlet (9) and an outlet (10).

The inlet (9) faces the outflow hole provided on the wall of the container (S), while in the preferred embodiment the outlet (10) is provided with a screw cap (20).

The tap (11) or valve according to the present invention also comprises a butterfly shutter (F) with seal means (6) situated on the peripheral border to prevent the undesired leakage of the fluid.

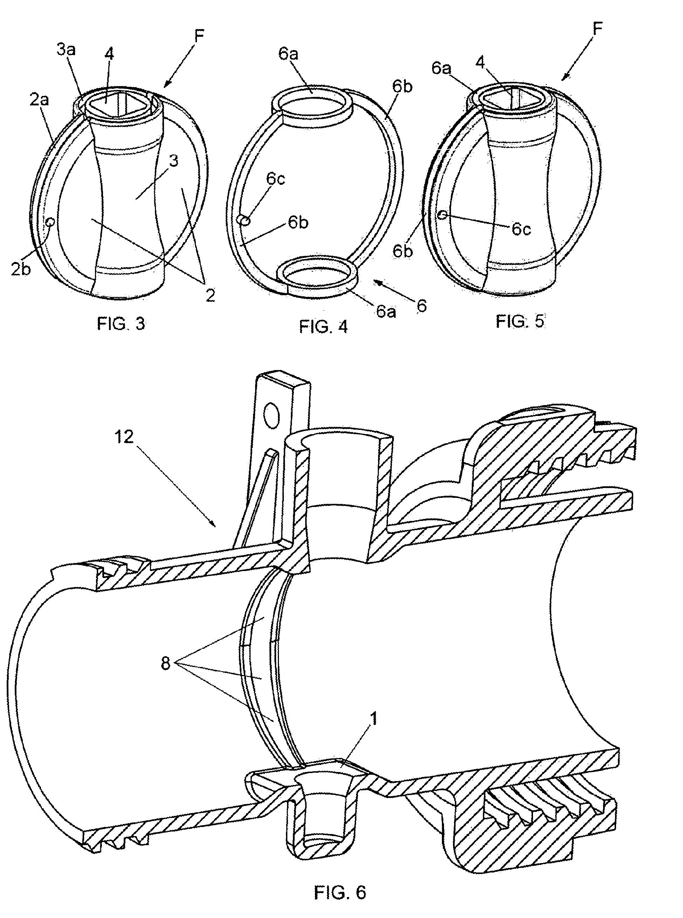

As shown in fig. 3, the butterfly shutter (F) is composed of a shutter body (3) and two seal wings (2). The shutter body (3) has a preferably through cavity (4) that houses an actuation pin (5).

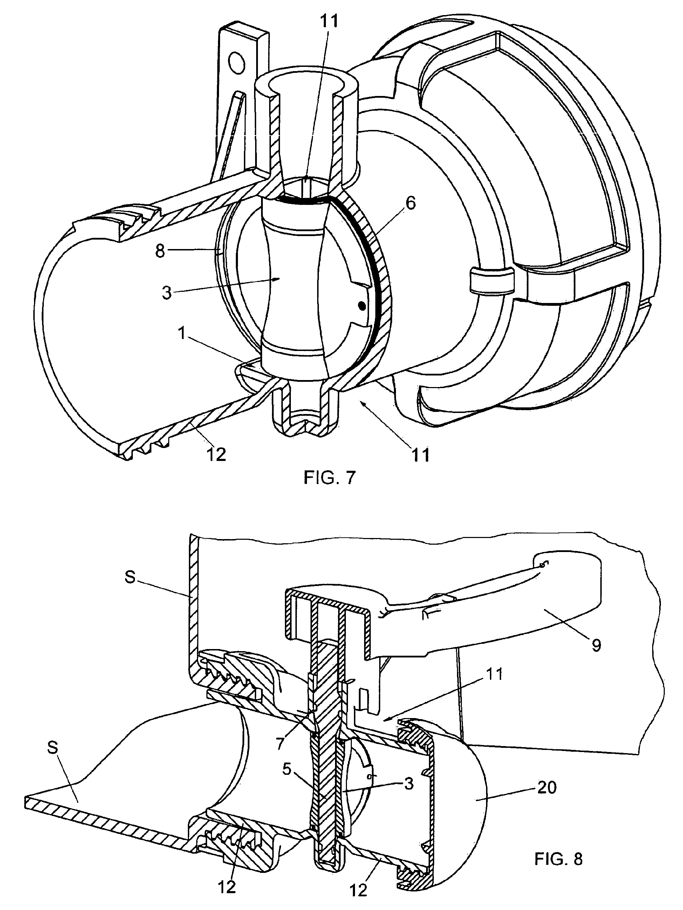

According to the preferred embodiment, the seal wings (2) have a cavity (2a) to house the second seal means (6b) illustrated in fig. 4, in such a way that the situation shown in fig. 5 is obtained when the second seal means (6b) are housed in the cavity (2a), in which the second seal means (6b) partially protrude from the cavity (2a) and allow to obtain the watertight seal between the seal wings and the valve body, as shown in fig. 7.

With reference to fig. 3, the two opposite ends of the shutter body (3) have a cavity (3a) that houses the first seal means (6a). The cavity (3a) basically surrounds the channel or a through cavity (4).

The first seal means (6a) are illustrated in fig. 4 and basically have a loop shape, in particular with square section, and are designed to be inserted, at least partially, into the cavity (3a), in such a way to obtain the situation shown in fig. 5 in which the first seal means (6a) partially protrude from the cavity (3a) and allow to achieve the watertight seal between the shutter body (3) and the valve body (12), as shown in fig. 7.

The shutter (F) is opened or closed by means of an actuation pin (5) housed in the cavity (4) and electromechanically and/or manually controlled with a lever (9).

Fig. 2 is a longitudinal sectional view of the constructive embodiment shown in fig. 1 when the valve is closed. The housings for mutual coupling (1) of the shutter body (3) and the valve body (12) are preferably composed of horizontal surfaces, in opposite parallel position. The first seal means (6a) constantly operate in the housings for mutual coupling (1) to prevent any undesired leakage of the fluid.

According to the constructive embodiment described in the figures, the valve body (12) in the area where the valve body (12) is interfaced with the seal wings (2) has a reduced diameter of the valve body (12), and in particular, as shown in figs. 6 and 8, the diameter of the valve body (12) in the butterfly shutter (F) is reduced by the presence of an opposite pair of ribs (8) designed to receive the second seal means (6b) in peripheral position on the seal wings (2).

The pairs of ribs (8) have a so-called saddlebacked profile and a basically rounded section, as shown in fig. 6.

This advantageously ensures the watertight seal between the seal wings (2) and the pairs of ribs (8) obtained by means of the second seal means (6b).

According to the preferred embodiment illustrated in fig. 4 and fig. 7, the first (6a) and second seal means (6b) are obtained from the same piece, being a single seal means (6) provided with two opposite arches that rest on the same plane, generated by the second seal means (6b) coupled in the ending areas of the arches by two parallel loops generated by the first seal means (6a).

According to the preferred embodiment, the two seal wings (2) situated on opposite sides of the shutter body (3) are advantageously the same, so that the said shutter (F) has a symmetric configuration with respect to the rotation axis of the shutter, with a symmetric distribution of the hydraulic pressure on the seal wings (2), that is to say a better seal when the valve is closed.

According to this embodiment, the first seal means (6a) consist in identical loops, and the second seal means (6b) also consist in identical symmetric arches, thus making construction of the single seal means (6) extremely easy and inexpensive.

Advantageously, in order to maintain the single seal means (6) or at least the second seal means (6b) in position, at least one of the second seal means (6b) has an anti-slide plug (6c) designed to be interfaced with a corresponding hole (2b) on the corresponding seal wing (2).

In order to improve the watertight seal, the first seal means (6a) and the second seal means (6b) are made of soft plastic material and/or natural or synthetic rubber.

The shape of the seal means (6a), (6b), (6), the material and the presence of ribs (8) do not require the use of additional seals, for example along the actuation pin, to prevent undesired infiltrations and leakage of fluid, both with closed and open valve, thus making the valve or tap according to the present invention especially inexpensive and functional.

With reference to figs. 1 and 2, the shutter body (3) is crossed by a channel or through cavity (4) for the insertion of the actuation pin (5) of the valve, which according to this embodiment has a square section, being generally provided with any polygonal shape, and moreover the actuation pin (5) has a friction band (7), such as for example an o-ring or similar part, to maintain the opening angle of the butterfly shutter (2).

The friction band (7) generates a resistance to the rotating opening/closing movement of the shutter (F) and, since the force exerted on the seal wings (2) is extremely balanced because of the symmetric shape of the shutter (F), allows to advantageously maintain the shutter in any intermediate position between the completely open and completely closed position of the valve.

Moreover, in order to guarantee the inexpensive construction of the valve or tap according to the present invention, the second seal means (6b) are moulded, overmoulded or moulded from the same piece with the seal wings (2), being both the first seal means (6a) and the second seal means (6b) made of soft plastic material or natural or synthetic rubber.

According to the preferred embodiment illustrated in fig. 8, the tap (11) or valve according to the present invention comprises a lever (9) operatively connected to the pin (5).

According to an advantageous constructive embodiment, the lever (9) is provided with stoppers.

The present invention also relates to the combination of the tap (1) or valve with a container (S) for fluids.

A further object of the present invention is a construction method of a tap (11) or valve characterised by the fact that the seal wings (2) are moulded from the same piece with the shutter body (3) and the first and second seal means (6a, 6b) or the single seal means (6) are directly moulded on the butterfly shutter (F) by preloading the injection mould.

## Claims

1. Tap (11) or valve of the type comprising a valve body (12) with an inlet (9) and an outlet (10), a butterfly shutter (F) designed to cooperate through rotation with the valve body (12) to close/open the said valve, the said butterfly shutter (F) being composed of at least one shutter body (3) and two seal wings (2), and also being composed of actuating means to open and close the said butterfly shutter, tap (11) or valve **characterised by** the fact that it is provided with first seal means (6a) situated between the shutter body (3) and the valve body (12), being the first sealing means (6a) situated on a horizontal plane that is to say an orthogonal plane to the rotation axis of the butterfly shutter (F), and by the fact that it is provided with second seal means (6b) situated between the said valve body (12) and the seal wings (2), being the second seal means (6b) on a vertical plane, that is to say an orthogonal plane to the horizontal plane and/or a plane on which the inlet (9) and the outlet (10) rest.

2. Tap (11) or valve according to claim 1, **characterised by** the fact that the first (6a) and second seal means (6b) are obtained from the same piece, being a single seal means (6) that is provided with two opposite arches that rest on the same plane, generated by the second seal means (6b) coupled in the ending areas of the arches by two parallel loops generated by the first seal means (6a).

3. Tap (11) or valve according to one or more of the preceding claims, **characterised by** the fact that the seal wings (2) have a cavity (2a) to house the second seal means (6b) and the shutter body (3) has a cavity (3a) for the first seal means (6a), being the said seal means (6a, 6b) partially protruding with respect to the said cavities (3a, 2a) when the seal means (6a, 6b) are mounted in the corresponding cavities (3a, 2a).

4. Tap (11) or valve according to one or more of the preceding claims, **characterised by** the fact that at least one of the second seal means (6b) has an anti-slide plug (6c) designed to cooperate with a corresponding hole (2b) on the corresponding seal wing (2).

5. Tap (11) or valve according to one or more of the preceding claims, **characterised by** the fact that the shutter body (3) is coupled with the said valve body (12) in two opposite housings for mutual coupling (1) of the shutter body (3) and the valve body (12), being each housing for mutual coupling (1) composed of a flat surface, and being the said housings for mutual coupling (1) in opposite parallel position.

6. Tap (11) or valve according to one or more of the preceding claims, **characterised by** the fact that the shutter body (3) is centrally positioned with respect to the two seal wings (2), being the seal wings (2) identical and situated on opposite sides of the shutter body (3), in such a way that the shutter (F) has a symmetric configuration with respect to the rotation axis of the shutter.

7. Tap (11) or valve according to one or more of the preceding claims, **characterised by** the fact that the said tap or valve comprises actuation means of the valve or tap, comprising at least an actuation pin (5) designed to be coupled to the shutter (F) and electromechanical and/or manual actuation means, such as a lever (9) that is operatively associated with the actuation pin (5) by means of a cavity (4) that houses the pin (5).

8. Tap or valve according to one or more of the preceding claims, **characterised by** the fact that the valve body (12) in the interfacing area of the valve body (12) and the seal wings (2) has a reduced diameter of the valve body (12), being the said reduced diameter of the valve body (12) obtained by means of an opposite pair of ribs (8) designed to receive the second seal means (6b) in peripheral position on the seal wings (2), and being the said ribs (8) configured as an arch on the wall of the valve body (12) and provided with a so-called saddlebacked profile and basically rounded section.

9. Tap or valve according to one or more of the preceding claims, **characterised by** the fact that the actuation pin (5) has at least a friction band (7), such as for example an o-ring or similar part, able to maintain the opening angle of the butterfly shutter (F2).

10. Tap (11) or valve according to claim 1 and 2, **characterised by** the fact that the second seal means (6b) are moulded, overmoulded or obtained from the same piece with the seal wings (2).

11. Tap (11) or valve according to one or more of the preceding claims, **characterised by** the fact that the first seal means (6a) and the second seal means (6b) are made of soft plastic material or natural or synthetic rubber.

12. Tap (11) or valve according to one or more of the preceding claims, **characterised by** the fact that it comprises a lever (9) that is operatively connected with the pin (5).

13. Combination of a container (S) for fluids and a tap (11) or valve according to one or more of the preceding claims from 1 to 12.

14. Construction method of a tap (11) or valve **characterised by** the fact that the seal wings (2) are moulded from the same piece with the shutter body (3) and the first and second seal means (6a, 6b) are directly moulded on the butterfly shutter (F).
